# EUROPEAN PATENT SPECIFICATION

(11) **EP 1 187 284 B1**
(45) Date of publication and mention of the grant of the patent: **03.11.2010**
(21) Application number: 01307644.3
(22) Date of filing: 07.09.2001
(51) Int. Cl.: H02G 3/10, B60R 16/02

(54) **Electric connection box**
Elektrisches Verbindungsgehäuse
Boîtier de connexion électrique

(30) Priority: 08.09.2000 JP 2000273298
(43) Date of publication of application: 13.03.2002
(73) Proprietor: YAZAKI CORPORATION, Minato-ku Tokyo 108-8333 (JP)
(72) Inventor: Ito, Seiji, Susono-shi, Shizuoka (JP); Uematsu, Satoshi, Susono-shi, Shizuoka (JP); Yasuda, Tsukasa, Susono-shi, Shizuoka (JP); Watanabe, Kazuhiro, Susono-shi, Shizuoka (JP); Nakatsugawa, Susumu, c/o Yazaki Parts Co., Ltd., Sapporo-shi, Hokkaido (JP)
(74) Representative: Haley, Stephen

(56) References cited:
- EP-A- 1 187 283
- US-A- 3 892 911
- US-A- 4 000 447
- US-A- 5 947 435

## Description

The present invention relates to an electric connection box, and more particularly to an electric connection box which enables the effective use of a space within an automobile.

A conventional electric connection box, mounted on an automobile, includes a body containing an electric circuit. The body includes a connection portion, to which a wire harness or the like can be connected, and a mounting portion on which electronic parts, such as a fuse, are mounted. The connection portion and the mounting portion are covered with a predetermined cover member. The boxy of such an electric connection box is fixed to a fixing surface, such for example, an inner wall surface of an engine room, and when performing the maintenance and inspection, the cover member is removed from the body.

In recent years, the effective use of the engine room has been made, and it has now been proposed to mount the electric connection box in a dead space, which has so far been overlooked, such for example as a space between a lower portion of a headlamp and an upper portion of a wheel arch.

When the conventional electric connection box is to be mounted at the above place, the electric connection box can be mounted at this place in a car-manufacturing plant before the headlamp is mounted on a vehicle body, and in this operation, the operator can mount the electric connection box while looking downward from above the engine room. electric connection box is introduced into the engine room from the upper side thereof, and is moved downward toward the above place.

Generally, it is desired that the headlamp, once mounted on the vehicle body, should be kept in this mounted condition as much as possible so that an adjusted optical axis of the headlamp can be maintained.

Therefore, in order to perform the maintenance and inspection, the electric connection box, mounted at the above place, need to have a structure in which the body can be drawn out horizontally through the space between lower portion of the headlamp and the upper portion of the wheel arch, or a structure in which that portion of the body to be subjected to the maintenance and inspection, is exposed in a horizontal direction.

US-A-3892911 discloses an electronic connection box in which a body containing an electric circuit is fixed to a fixing surface through a support member.

The present invention satisfies the above requirements, and an object of the invention is to provide an electric connection box which can provide a good maintenance ability even when the electric connection box is mounted at a narrow region.

The above object has been achieved by an electric connection box wherein a body containing an electric circuit, is fixed to a fixing surface through a support member characterized by:
said support member including a frame-like first member for receiving said body and a second member attached to said first member; and
wherein one of said first and second members is fixed to said fixing surface, and said body is attached to and detached from said first member in a direction of extending of a through space of said first member, and said first and second members are attached and detached relative to each other in a direction intersecting said through space-extending direction.

A connection portion, to which a wire harness can be connected, and a mounting portion, on which electronic parts, such as a fuse, are mounted, may be provided at the same surface of the body, or may be provided respectively at a pair of surfaces of the body facing away from each other.

In the case where the connection portion and the mounting portion are provided at the same surface of the body, the body may be received in the first member in such a manner that the connection portion and the mounting portion face the second member, or the body may be received in the first member in such a manner that the connection portion and the mounting portion face away from the second member.

In this electric connection box, the support member comprises the first member and the second member, and therefore for example, in the case where the first member is fixed to the fixing surface of a vehicle body or the like, the maintenance and inspection can be performed for the body exposed from the support member upon removal of the second member from the first member. In the case where the second member is fixed to the fixing surface, the body can be drawn out from the mounted position, and the maintenance and inspection can be performed.

Namely, even when the electric connection box of this construction is mounted between a lower portion of a headlamp and an upper portion of a wheel arch within an engine room, the good maintenance ability can be obtained, and therefore the above object can be achieved.

In this electric connection box, the support member comprises the first member and the second member, and therefore when the shapes, dimensions and so on of the first and second members are suitably selected in accordance with the kind of car, any special processing does not need to be applied to the body, and therefore the versatility for the mounting form of the body can be obtained.

Particularly by suitably selecting the shapes, dimensions and so on of the first and second members, this electric connection box can be mounted at various places.

In the invention, the second member can close one end of the first member disposed in the through hole-extending direction, and therefore in the case where the body is mounted in such a manner that the connection portion faces the second member, the good waterproof effect for the body can be obtained.

In the invention, the second member is fixed to the fixing surface, and therefore the body can be drawn out from the mounted region when the first member is removed from the second member, and therefore the better maintenance ability can be obtained as compared with case where the first member is fixed to the fixing surface.

In the invention, there are provided engagement portions and claws for engaging the body with the first member, and the engagement portions are provided at one of the first member and the body while the claws, engageable respectively with the engagement portions, are provided at the other of the first member and the body.

Each engagement portion and each claw may be formed respectively on the outer surfaces of the first member and the body, so that these are exposed to the exterior. Alternatively, the engagement portion and the claw may be formed on the inner surface of the first member and the outer surface of the body, respectively, so that these, held in the engaged condition, are concealed from an external view.

The engagement projection and the claw may be so constructed as to be engaged with each other in an irreversible manner, or the body may be so constructed as to be attached and detached relative to the first member.

In this electric connection box, the first member and the body are fixed to each other by the engagement portions and the claws, and therefore when the form, number, positions and so on for the engagement portions and the claws are beforehand determined, a selected one among many kinds of first members of various constructions and a selected one among many kinds of bodies of various constructions can be used in combination, and therefore the good versatility can be obtained.

In the invention, the claw extends from an outer surface of the first member in the through space-extending direction, and a distal end of the claw projects beyond a peripheral portion of the body in the through space-extending direction.

In this electric connection box, the distal end of each claw, formed on the first member, projects from the peripheral portion of the body, and therefore when separating the first member and the body, fixed together, from each other, the finger of the operator or a tool can be easily engaged with the claw so as to elastically deform the same, and therefore the good operation efficiency can be obtained.

In the invention, wall portions are provided in surrounding relation to the claws, respectively, and the wall portion limits an angle of elastic deformation of the corresponding claw.

In this electric connection box, the claw is surrounded by the wall portion, and therefore damage of the claw, as well as the disengagement of the claw from the engagement portion as a result of the unintentional elastic deformation of the claw, can be reduced. In this electric connection box, the wall portion limits the angle of elastic deformation of the claw, and therefore the claw is prevented from being excessively elastically deformed when separating the first member and the body, fixed together, from each other, and therefore the claw is prevented from damage.

In the invention, there is provided guide mechanism for guiding the sliding movement of the first and second members relative to each other in a direction of attaching and detaching of the first and second members relative to each other; and
the guide mechanism includes a pair of first guide rails, which are provided at the first member, and extend in the attaching and detaching direction, and a pair of second guide rails which are provided at the second member, and are engageable with the first guide rails, respectively.

For example, in the case where the first member is received in the second member, the first guide rails may be formed on the outer surface of the first member while the second guide rails may be formed on the inner surface of the second member. In the case where the first member is not received in the second member, the first guide rails may be formed at the end portion of the first member disposed in the through space-extending direction, while the second guide rails may be formed respectively at predetermined portions of the second member.

The first and second guide rails may have a rib-like shape and a groove-like shape, respectively, so that the two can be engaged with each other in a concave-convex manner, or the first and second guide rails may be engaged with each other generally in a cross-sectionally T-shaped manner or a cross-sectionally L-shaped manner.

In the electric connection box of this construction, the first member and the second member are guided relative to each other through the first guide rails and the second guide rails, and therefore the first member can be easily attached to and detached from the second member, and besides the position of the first member relative to the second member can be positively maintained.

In the invention, the first member is received in the second member, and the first guide rails are provided respectively at a pair of outer surfaces of the first member facing away from each other, and the second guide rails are provided respectively at a pair of inner surfaces of the second member opposed respectively to the first guide rails.

In this electric connection box, the first guide rails are provided respectively at the outer surfaces of the first member while the second guide rails are provided respectively at the inner surfaces of the second member, and therefore there is no fear that the first member is disengaged from the second member which is, for example, fixed to the fixing surface in the direction of extending of the through space of the first member, and the mutually-fixed condition of the first and second members can be positively maintained regardless of the mounting form of the support member.

In the invention, one of the first guide rail and the second guide rail has a generally T-shape cross-section, and the other of the first guide rail and the second guide rail has a generally T-shaped groove, and the one of the first guide rail and the second guide rail is received in and guided by the other.

In the electric connection box of this construction, the first guide rails are engaged respectively with the second guide rails in a labyrinth manner, and therefore the good waterproof and dustproof effects can be achieved between the first and second members.

In the invention, a width of an engaging direction starting end of the one of the first guide rail and the second guide rail is smaller than a width of an engaging direction terminal end thereof.

In the electric connection box of this construction, the one of the first and second guide rails, having a generally T-shaped cross-section, is tapering in the engaging direction, and therefore the dimensional difference develops with respect to the groove width of the engaging direction starting end of the other guide rail.

Therefore, in this electric connection box, the first and second guide rails can more easily begin to be engaged with each other as compared with the case where there is no dimensional difference between the width of the engaging direction starting end of the first guide rail and the groove width of the engaging direction starting end of the second guide rail.

In the invention, a width of a groove at an engaging direction starting end of the other of the first guide rail and the second guide rail is larger than a width of the groove at an engaging direction terminal end thereof.

In the electric connection box of this construction, the width of the T-shaped groove, formed in the other of the first and second guide rails, is increasing toward the engaging direction starting end thereof, and therefore the dimensional difference develops with respect to the width of the engaging direction starting end of the one of the first and second guide rails.

Therefore, in this electric connection box, the first and second guide rails can more easily begin to be engaged with each other as compared with the case where there is no dimensional difference between the width of the engaging direction starting end of the first guide rail and the groove width of the engaging direction starting end of the second guide rail.

In the invention, a notch portion is formed at the engaging direction starting end portion of the other of the first guide rail and the second guide rail, and the engaging direction starting end portions of the first and second guide rails can be engaged with each other through the notch portion in the direction of the width thereof.

The notch portion can be formed by removing part of one of a pair of guide walls between which the one of the first and second guide rails can be interposed.

In the electric connection box of this construction, the engaging direction starting ends of the first and second guide rails can be engaged with each other through the notch portion, and therefore the first and second guide rails can more easily begin to be engaged with each other as compared with the case where the notch portion is not provided.

Generally, in the injection molding of the first member or the second member, there are occasions when one of the first and second guide rails must be divided into a plurality of sections since the various portions thereof are integrally formed with one another.

In this case, one of the first and second guide rails is designed to be received in the other, and therefore unless the first and second guide rails are parallel to each other in the longitudinal direction, there is a possibility that corner portions of the longitudinal opposite ends of each section of the divided guide rail interfere with the other guide rail, so that the smooth operation can not be carried out.

Therefore, in the invention, the one of the first guide rail and the second guide rail comprises a plurality of rails arranged at predetermined intervals in the attaching and detaching direction, and chamfered portions are formed respectively at corner portions of opposite longitudinal ends of each of the rails. With this construction, the above problem is avoided.

In the invention, the second member has a cubic shape, and includes a receiving space for receiving the first member, and an opening which is continuous with the receiving space, and is disposed in a plane intersecting the direction of attaching and detaching of the first and second members relative to each other, and a lid portion, extending from a side portion of the first member in the through space-extending direction, can close the opening.

In the electric connection box of this construction, for example, the body is oriented in such a manner that the connection portion for the wire harness is directed toward the second member, and the second member is fixed to the fixing surface. In this case, when the first member is removed from the second member, the lidportion, provided at the first member, opens the opening in the second member.

Namely, the first member can be removed from the second member, with the wire harness kept connected to the body, and therefore the maintenance and inspection can be performed easily.

In the invention, a flange portion is formed at an edge portion of the lid portion, and therefore the first member can easily be attached to and detached from the second member, with the finger of the operator or the like engaged with the flange portion.

In the invention, the second member has a communication hole which can communicate the inside and outside thereof with each other, and the communication hole is continuous with the opening.

In this electric connection box, when the wire harness is passed through the communication hole, the body can be oriented in such a manner that the wire harness connection portion is directed toward the second member. In this electric connection box, the communication hole is continuous with the opening, and therefore the wire harness can be more easily attached to and detached from the communication hole as compared with the case where the communication hole is not continuous with the opening.

In the invention, a rib is formed at an edge portion of the communication hole, and projects outwardly from the second member. Therefore, the wire harness can be positively fixed to the second member by fixing the wire harness to the rib by an adhesive tape or the like.

In the invention, a recess is formed at the inner side of the rib. Therefore, when a band clip of a binding band, binding the wire harness, is received in the recess formed at the inner side of the rib, the wire harness will not be moved relative to the second member in the axial direction, so that the wire harness can be positively fixed to the second member.

In the invention, a through hole is formed through the rib, and extends in a direction of a thickness of the rib. Therefore, when an engagement clip of the binding band, binding the wire harness, is fitted and engaged in the through hole, the wire harness can be positively fixed to the second member.

In the invention, there are provided projections and fixing portions for fixing the first and second members relative to each other, and the projections are provided at one of an edge portion of the opening and a peripheral portion of the lid portion, and the fixing portions, engageable respectively with the projections, are provided at the other of the edge portion of the opening and the peripheral portion of the lid portion.

In the electric connection box of this construction, the first member and the second member can be fixed to each other by engaging the projections respectively with the fixing portions.
Fig. 1 is a schematic, perspective view showing a preferred embodiment of the present invention;
Fig. 2 is an exploded, perspective view of an electric connection box;
Fig. 3 is a perspective view showing important portions of a body and a first member;
Figs. 4A and 4B are a schematic, enlarged cross-sectional view showing a detaching structure for the body and the first member;
Figs. 5A and 5B are a schematic, enlarged cross-sectional view showing a detaching structure for the first and second members;
Fig. 6 is a partly-cross-sectional, side-elevational view showing guide mechanism;
Fig. 7 is a fragmentary, enlarged perspective view showing a through hole;
Fig. 8 is a front-elevational view of the second member;
Fig. 9 is a perspective view showing the procedure of attaching the first member to the second member;

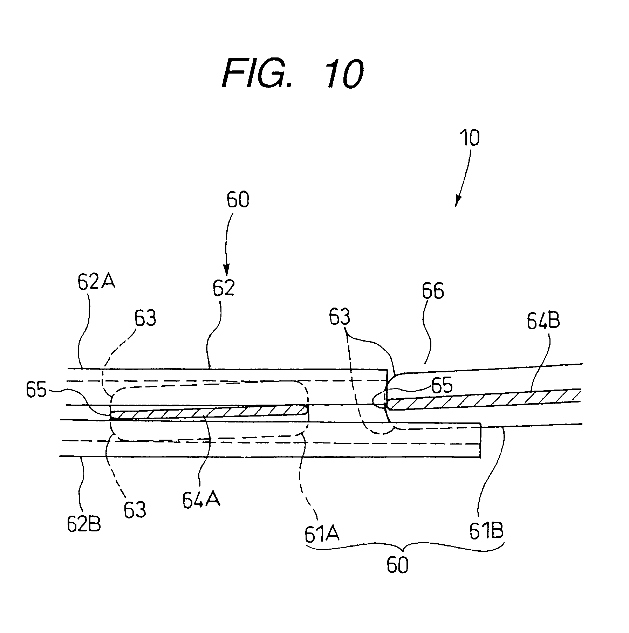

Fig. 10 is a partly-cross-sectional, side-elevational view showing the operation of the guide mechanism;
Fig. 11 is a partly-cross-sectional, side-elevational view showing a condition of engagement of first guide rails in a second guide rail; and

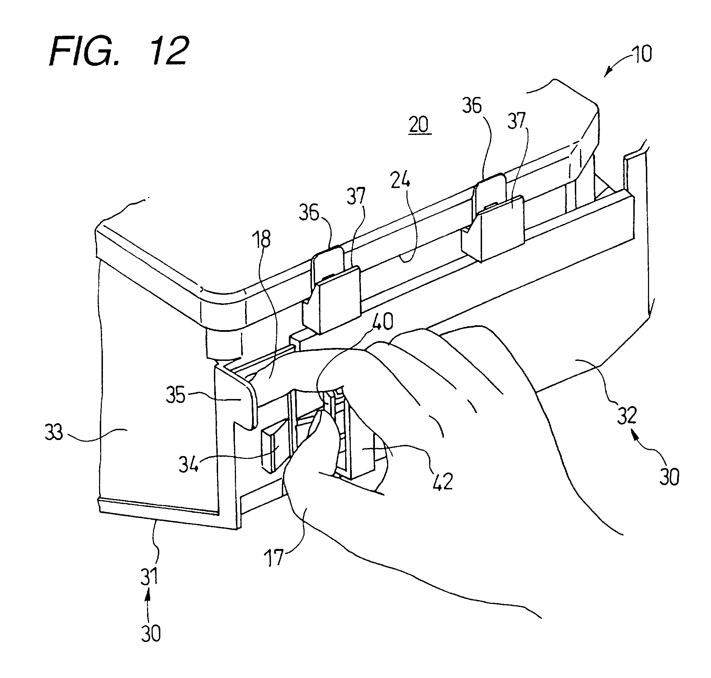

Fig. 12 is a perspective view showing the procedure of removing the first member from the second member.

A preferred embodiment of the present invention will now be described in detail with reference to the drawings.

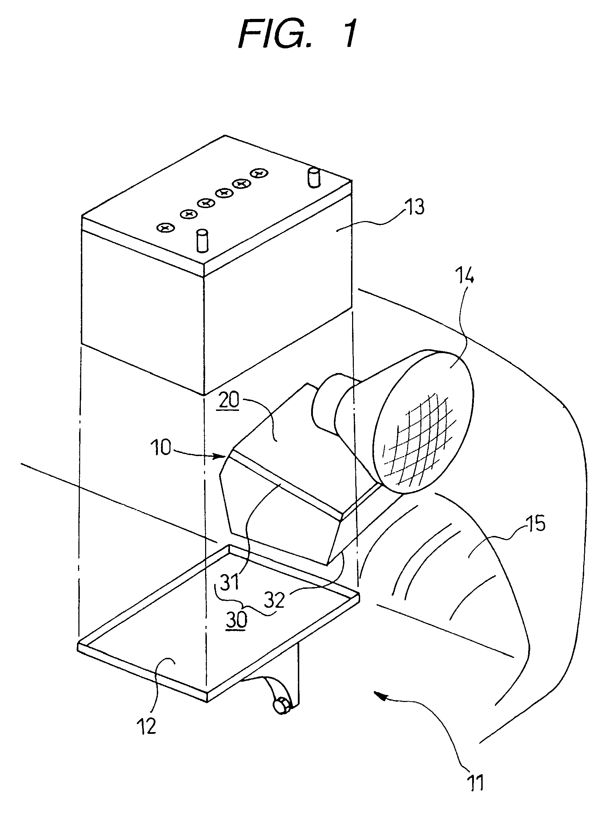

As shown in Fig. 1, an electric connection box 10 of this embodiment is mounted adjacent to a battery 13, mounted on a support base 12, within an engine room 11 of an automobile, and is disposed between a lower portion of a headlamp 14 and an upper portion of a wheel arch 15.

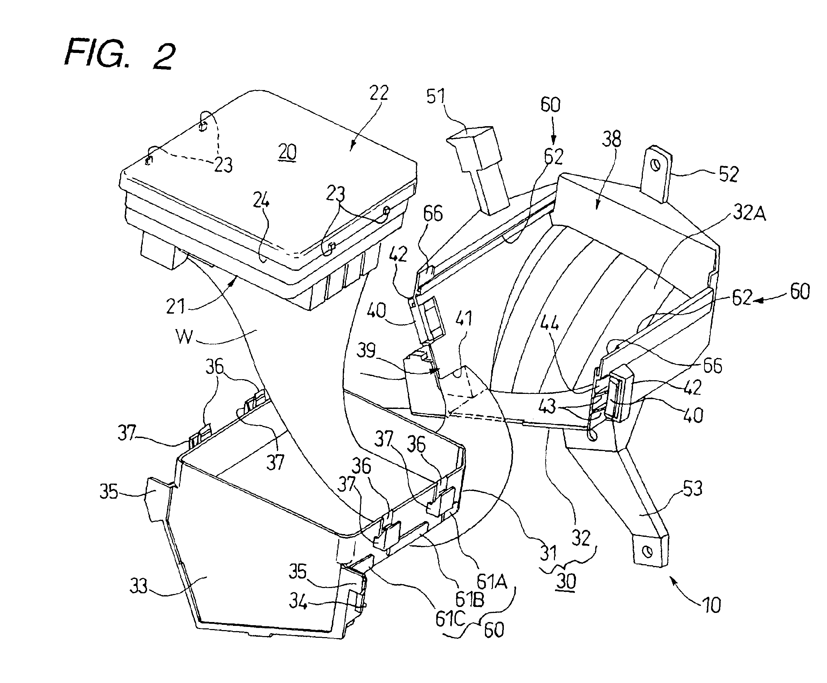

As shown in Fig. 2, a body 20 of this electric connection box 10, containing an electric circuit, is fixedly mounted on an inner surface (not shown) of the engine room 11, serving as a fixing surface, through a support member 30.

The body 20 has a generally flattened, rectangular parallelepiped shape, and a connection portion, to which a wire harness W can be connected, and a mounting portion, on which electronic parts, such as fuses, are mounted, are provided at a maintenance surface 21 defined by one side or face of the body 20 disposed in the direction of the thickness thereof.

This body 20 has a flat bottom surface (upper surface in Fig. 2) 22 facing away from the maintenance surface 21, and two engagement portions 23 are provided on each of a pair of longer side surfaces of this body. This body 20 has a stepped portion 24 formed on each side surface thereof, and therefore the body 20 is generally tapering from the bottom surface 22 toward the maintenance surface 21, and a groove (not shown) of a predetermined depth is formed along the stepped portion 24.

The support member 30 includes a first member 31 for receiving the body 20 having the maintenance surface 21 directed downward, and a second member 32 which is fixedly secured to the inner surface (fixing surface) of the engine room 11, and closes one end of the first member 31 disposed in a direction of extending of a through space thereof. The first member 31 can be attached to and detached from the second member 32 through guide mechanism 60.

Here, the direction of attaching and detaching of the first member 31 relative to the second member 32 is a direction intersecting the direction of extending of the through space of the first member 31 (penetrating direction of the first member), that is, a horizontal direction.

The first member 31 has a generally rectangular frame-shape when viewed from the top, and one edge portion (upper edge portion in Fig. 2) of the first member 31, disposed in the through space-extending direction, is fitted in the groove in the body 20, and with this arrangement the body 20 is supported in such a manner as not to be disengaged downwardly from the first member 31, and besides good waterproof and dustproof effects are achieved between the first member 31 and the body 20. The first member 31 includes a lid portion 33 of a modified square shape extending from one shorter side surface thereof in the through space-extending direction, a plurality of projections 34 formed at an edge portion of the lid portion 33, and a pair of flange portions 35 provided near respectively to the projections 34.

Two claws 36 are formed on each of the pair of longer side surfaces of the first member 31, and the first member 31 retains the body 20 by the claws 36 engaged respectively with the engagement portions 23 on the body 20.

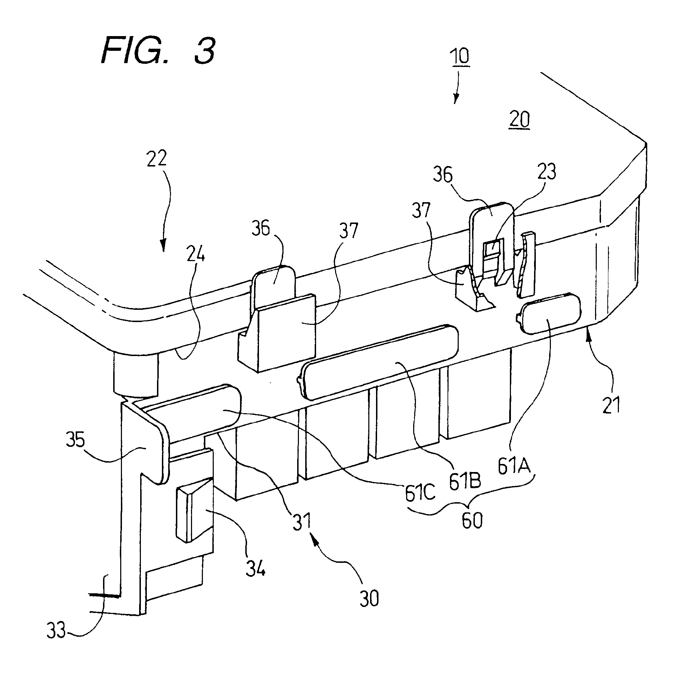

As shown in Fig. 3, the engagement portion 23 is in the form of a projection of a generally trapezoidal shape having a slanting surface slanting toward the maintenance surface 21. The claw 36 has a generally frame-shape, and is disposed in a wall portion 37 of a generally U-shape formed (molded) integrally on the longer side surface of the first member 31.

These claws 36 are molded integrally on the first member 31, and when each claw 36 is elastically deformed away from the first member 31, and slides past the slanting surface of the engagement portion 23, the claw 36 is restored into its initial shape, and is engaged with the engagement portion 23 in surrounding relation thereto. Each of these claws 36 has such a size that when the claw 36 is engaged with the engagement portion 23, the claw 36 projects upwardly beyond the bottom surface 22 of the body 20.

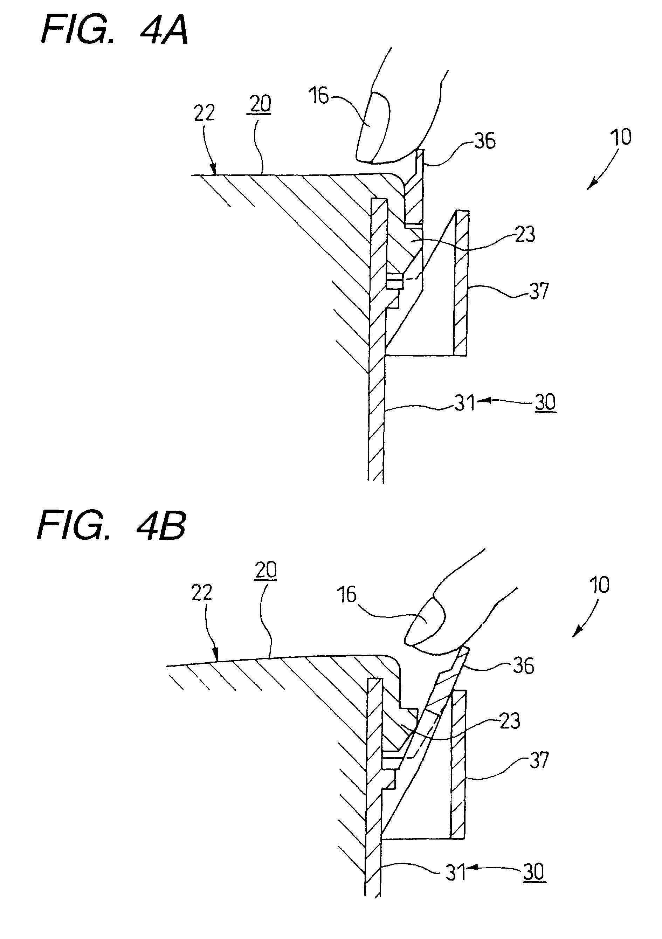

For disengaging the claw 36 from the engagement portion 23, the distal end of the claw 36 is pressed away from the first member 31 by the finger 16 of the operator or a predetermined tool, thereby elastically deforming the claw 36, as shown in Figs. 4A and 4B.

At this time, the operator can perform the operation easily since the distal end of the claw 36 projects upwardly beyond the bottom surface 22 of the body 20, and besides the angle of elastic deformation of the claw is limited by the wall portion 37, and therefore the claw 36 will not be elastically deformed in an amount larger than required, and damage of the claw 36 due to its excessive elastic deformation is avoided. The claw 36 is provided inside the wall portion 37, and therefore after the electric connection box 10 is mounted at the predetermined position, damage of the claw by contact and press-contact with other member, as well as the unintentional disengagement of the claw from the engagement portion 23, is avoided.

Referring back to Fig. 2, the second member 32 has a cubic shape, and includes a receiving space 38 for receiving the first member 31, an opening 39, which is continuous with the receiving space 38, and is open toward the battery 13 (see Fig. 1), a plurality of fixing portions 40, which are formed at an edge portion of the opening 39, and are engageable respectively with the projections 34 of the first member 31, and a communication hole 41 which is continuous with the opening 39, and can communicate the inside and outside with each other. This second member 32 has a rounded portion 32A so as not to interfere with the wheel arch 15 (See Fig. 1), and the second member 32 is fixed to the inner surface of the engine room 11 through a first bracket 51, a second bracket 52 and a third bracket 53 in such a manner that the bottom surface 22 of the body 20, supported by the first member 31, is disposed generally horizontally.

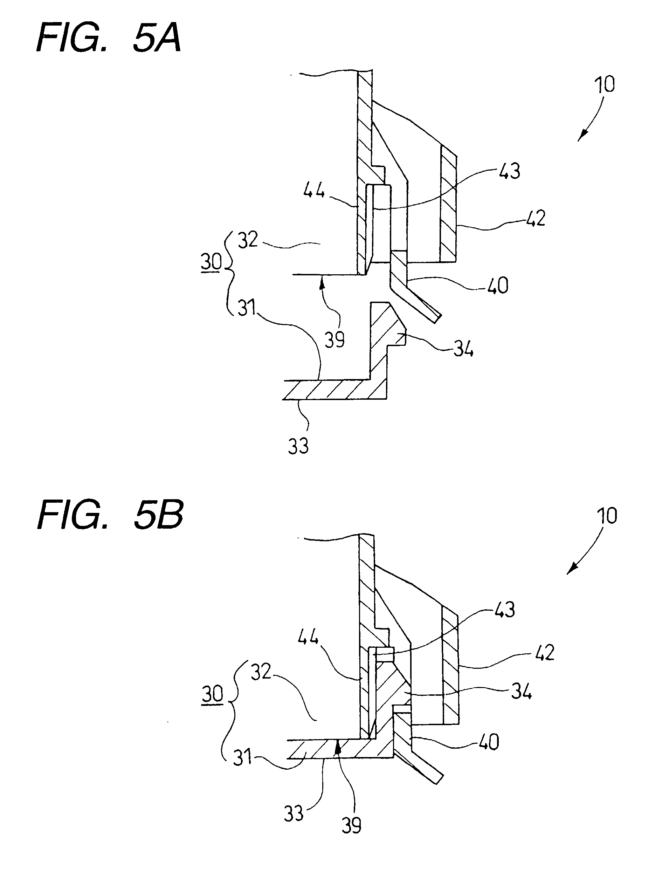

As shown in Figs. 5A and 5B, each of the projections 34, formed on the lid portion 33 of the first member 31, extends from the edge portion of the lid portion 33 in the direction of the thickness of the lid portion 33, and a distal end of the projection 34 is formed into an arrowhead-shape. Each of the fixing portions 40, formed at the edge portion of the opening 39 in the second member 32, has a generally frame-shape, and is provided in a protective wall 42 of a generally U-shape molded integrally on the second member 32.

When attaching the first member 31 to the second member 32 through the guide mechanism 60, each fixing member 40 is elastically deformed away from the second member 32, and when the fixing member 40 slides past the distal end of the projection 34, the fixing member 40 is restored into its initial shape, and is engaged with the projection 34 in surrounding relation thereto, so that the fixing members 40 lock the first and second members 31 and 32 to each other, with the opening 39 closed by the lid portion 33.

Guide plates 44, each having a plurality of ribs 43 opposed to the fixing portion 40, are formed at predetermined portions of the second member 32, respectively (see Fig. 2), and therefore even if there is an error in the direction of projecting of the projection 34 because of the sinking developing during the injection molding of the first member 31, the guide plate 44 guides the distal end of the projection 34 toward the fixing portion 40, so that the two can be positively engaged with each other.

Referring again to Fig. 2, the guide mechanism 60 includes first guide rails 61A, 61B and 61C, formed on each longer side surface of the first member 31, and a second guide rail 62 which is formed at each of opposed inner side surfaces of the second member 32, and is engageable with the corresponding first guide rails 61A, 61B and 61C.

Each of the first guide rails 61A, 61B and 61C has a generally T-shaped cross-section, and projects from the longer side surface of the first member 31, and extends continuously in the direction of the length of the longer side surface. The second guide rail 62 has a generally T-shaped groove extending continuously along the edge of the receiving space 38.

As shown in Fig. 3, the first guide rails 61A, 61B and 61C are arranged at predetermined intervals on a common straight line in view of the structure of a mold for injection molding the first member 31, and more specifically this arrangement is adopted so that these first guide rails will not be disposed in a path of sliding movement of a slide mold for forming each claw 36 and each wall portion 37.

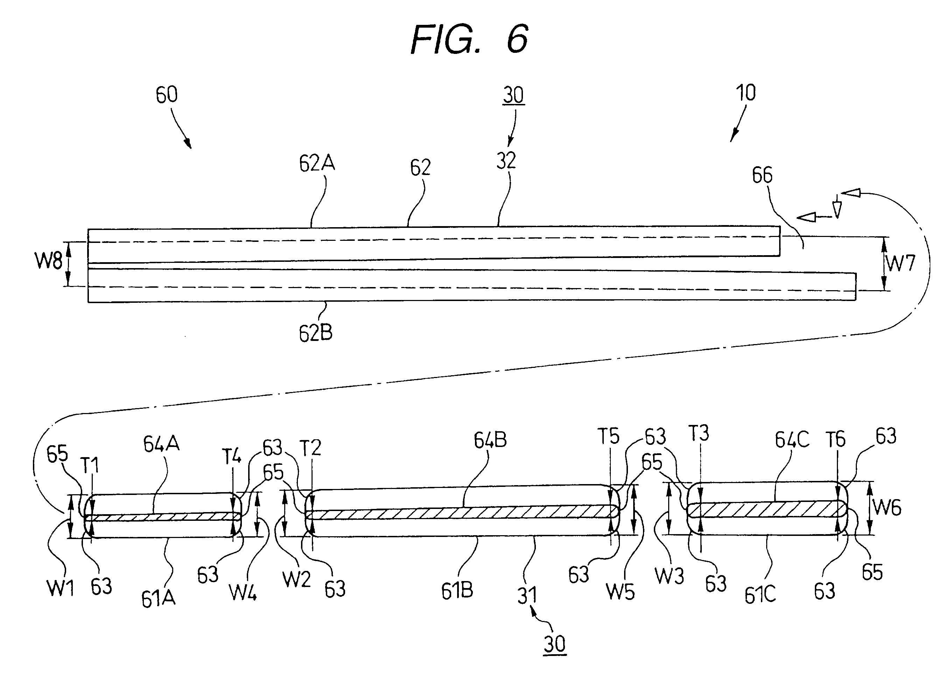

Fig. 6 shows the first guide rails 61A, 61B and 61C and the second guide rail 62 as seen outwardly from the side surface of the first member 31.

As shown in Fig. 6, widths W1, W2 and W3 of starting ends (left ends in Fig. 6) of the first guide rails 61A, 61B and 61C, disposed in the engaging direction, are smaller than widths W4, W5 and W6 of terminal ends thereof (right ends in Fig. 6), disposed in the engaging direction, respectively, and chamfered portions 63 are formed respectively at corner portions of the longitudinal opposite ends of each of these first guide rails.

Thicknesses T1, T2 and T3 of starting ends of pillar portions 64A, 64B and 64C (projecting from the longer side surface of the first member 31), disposed in the engaging direction, are smaller than tichknesses T4, T5 and T6 of terminal ends thereof, disposed in the engaging direction, respectively, and chamfered portions 65 are formed respectively at longitudinal opposite ends of each of these pillar portions.

A width W7 of the groove at a starting end (right end in Fig. 6) of the second guide rail 62, disposed in the engaging direction, is larger than a width W8 at a terminal end thereof (left end in Fig. 6) disposed in the engaging direction, and a notch portion 66 is formed at the engaging direction starting end portion.

The second guide rail 62 is formed by a pair of symmetrically-disposed side portions 62A and 62B of a generally inverted L-shape, and the notch portion 66 is formed by removing the longitudinal end portion of the side portion 62A disposed away from the second member 32.

In the guide mechanism 60, the first guide rails 61A, 61B and 61C are received sequentially in the second guide rail 62 in the longitudinal direction, and by doing so, the first member 31 can be slidably guided relative to the second member 32.

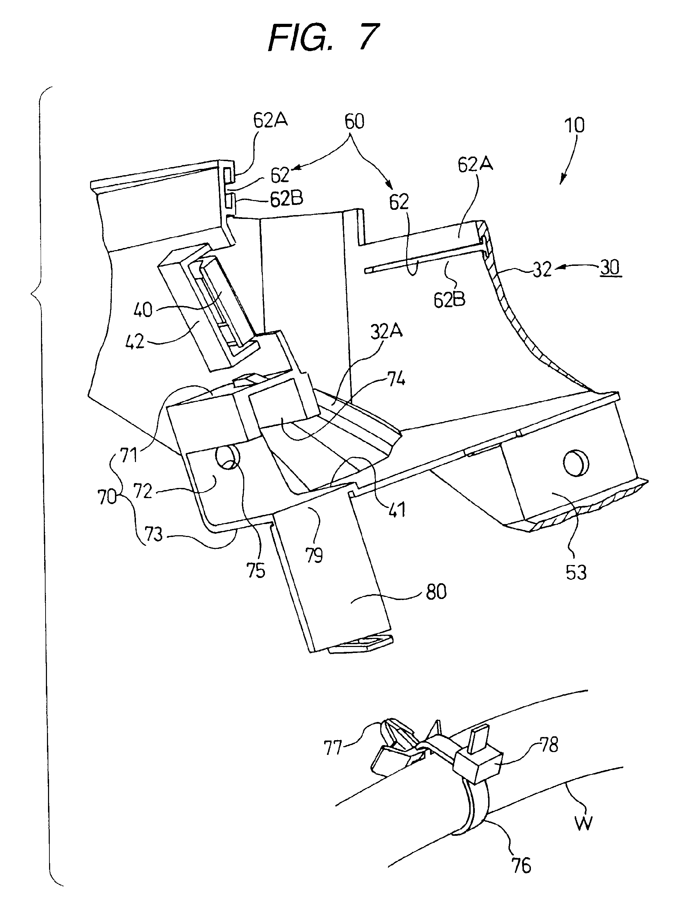

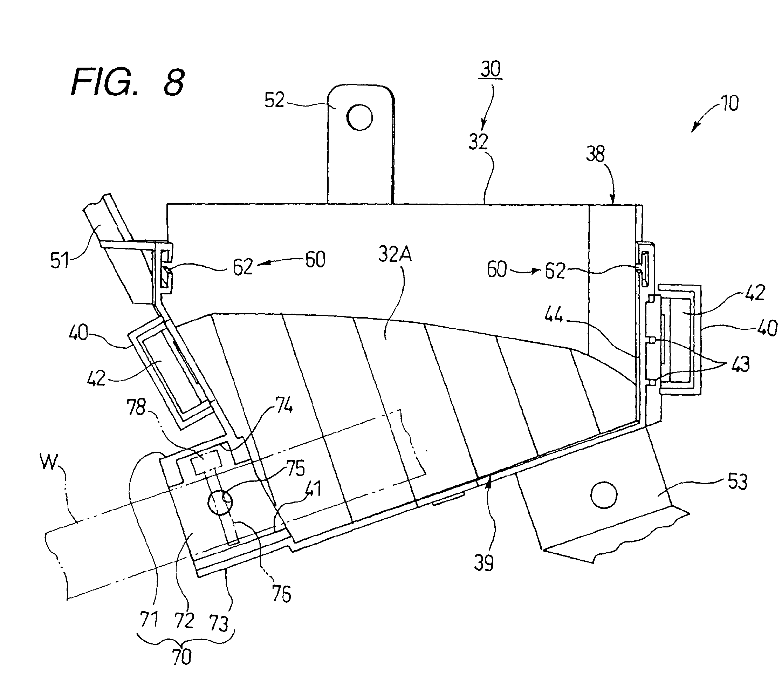

As shown in Figs. 7 and 8, the communication hole 41, formed in the second member 32, has a rectangular shape, and has an opening area for passing the wire harness W therethrough, and a rib 70 is formed at an edge portion of this communication hole, and projects outwardly from the second member 32.

The rib 70 has a generally U-shape, and includes projecting walls 71, 72 and 73 formed respectively at three sides of the communication hole 41. A recess 74 is formed at the inner side of the projecting wall 71, and a through hole 75 is formed through the projecting wall 72, and extends in a direction of the thickness of this projecting wall 72. An engagement clip 77 is formed on a binding band 76 binding the wire harness W.

With respect to the communication hole 41, the engagement clip 77 of the binding band 76 is fitted and engaged in the through hole 75, and a band clip 78 of the binding band 76 is received in the recess 74, and then a retaining led 80, connected to the projecting wall 73 through a thin hinge 79, is pivotally moved into a closed position, and by doing so, the wire harness W is fixed to the second member 32.

At this time, the wire harness W can not be turned about its axis since the engagement clip 77 of the binding band 76 is fitted and engaged in the through hole 75, and also the wire harness W can be moved in its axial direction since the band clip 78 of the binding band 76 is received in the recess 74, and further the wire harness W is prevented by the retaining lid 80 from being disengaged from the communication hole 41.

Next, the procedure of mounting the electric connection box 10 at the predetermined position of the vehicle body, as well as the procedure of removing the body 20 from the electric connection box 10 mounted at the predetermined position, will be described.

First, as shown in Fig. 2, the body 20 is received in the first member 31, so that the maintenance surface 21 is disposed within the first member 31, and the claws 36 are engaged respectively with the engagement portions 23, thereby locking the body 20 and the first member 31 to each other.

On the other hand, the second member 32 is beforehand fixed at a predetermined position within the engine room 11 through the first, second and third brackets 51, 52 and 53.

Then, that portion of the wire harness W, spaced a predetermined distance from the end thereof, is bound by the binding band 76, and the engagement clip 77 of the binding band 76 is fitted and engaged in the through hole 75, and the band clip 78 of the binding band 76 is received in the recess 74, and then the retaining lid 80 is pivotally moved to close the rib 70, thereby fixing the wire harness W to the second member 32.

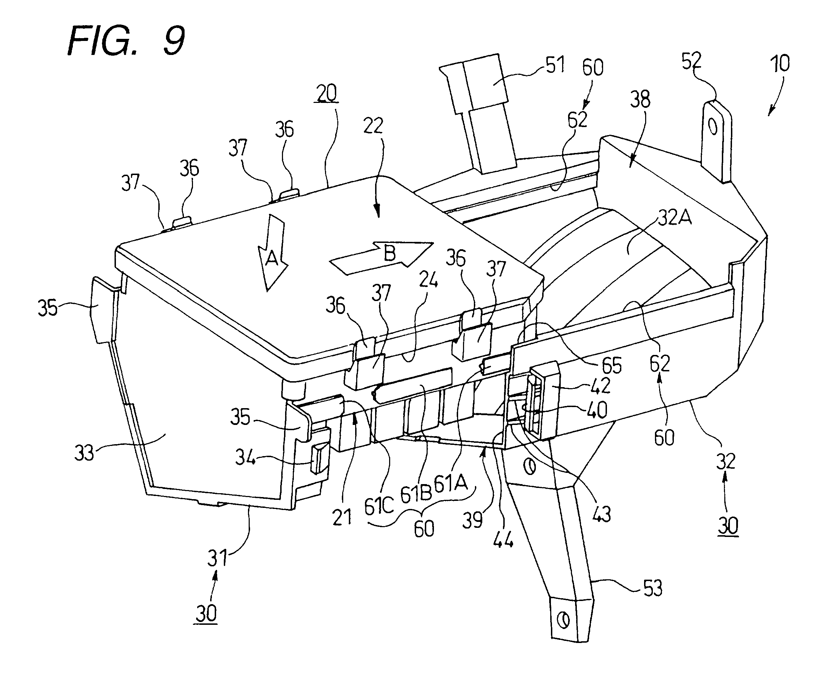

Then, as shown in Fig. 9, the first member 31 is disposed just above the second member 32 in such a manner that the engaging direction starting end portion of each first guide rail 61A is disposed in parallel, overlapping relation to the engaging direction starting end portion of the corresponding second guide rail 62. Then, the first member 31 is moved downward toward the second member 32, so that the engaging direction starting end portion of the first guide rail 61A is engaged with the engaging direction starting end portion of the second guide rail 62 in the direction of the width thereof (see arrow A in Fig. 9).

Then, the first guide rails 61A, 61B and 61C are received sequentially in the corresponding second guide rail 62 in the longitudinal direction in such a manner that an extra portion of the wire harness W is received in the second member 32 while preventing the wire harness W from being held between the lid portion 33 of the first member 31 and the edge of the opening 39 of the second member 32. Thus, the first member 31 is moved in the direction intersecting the through space-extending direction (see arrow B in Fig. 9).

Each of the first guide rails 61A, 61B and 61C is tapering toward its engaging direction starting end, and the width of the groove of the second guide rail 62 is increasing toward the engaging direction starting end thereof. Therefore, in the above operation, a dimensional difference develops between the engaging direction starting end of each of the first guide rails 61A, 61B and 61C and the engaging direction starting end of the second guide rail 62, and therefore each of the first guide rails 61A, 61B and 61C can easily begin to be engaged in the second guide rail 62.

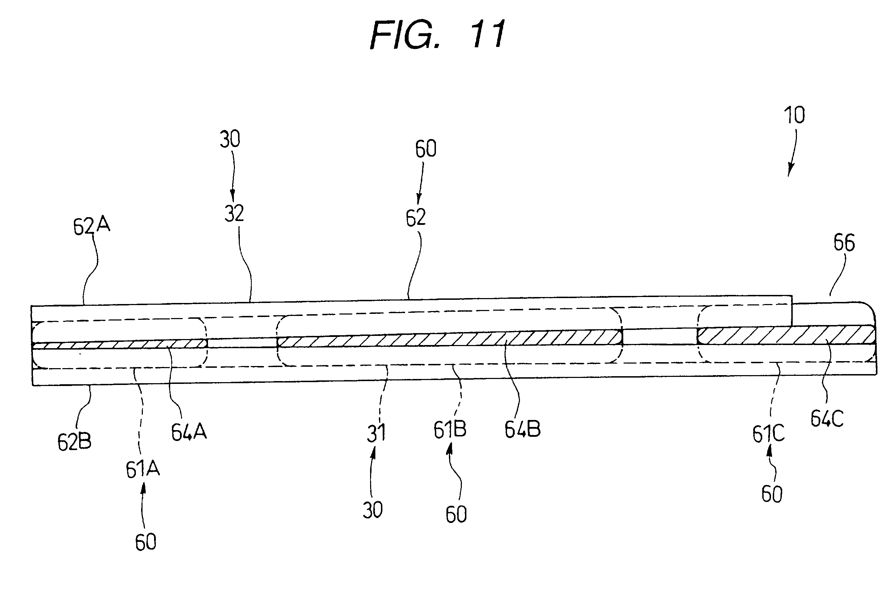

There are occasions when the first guide rails 61A, 61B and 61C fail to be kept parallel to the second guide rail 62, and are guided into the second guide rail 62 in a scratching or scoring manner as shown in Fig. 11. The chamfered portions 63 are formed respectively at the corner portions of the longitudinal opposite ends of each of the first guide rails 61A, 61B and 61C, and the chamfered portions 65 are formed respectively at the longitudinal opposite ends of each of the pillar portions 64A, 64B and 64C. Therefore, when the chamfered portions 63 and 65 abut against the edge of the groove opening at the engaging direction starting end portion of the second guide rail 62, each of the first guide rails 61A, 61B and 61C is guided by the chamfered portions 63 and 65, and is positively slid and guided into the second guide rail 62.

In the guide mechanism 60, when the engaging direction staring end of the first guide rail 61A abuts against the engaging direction terminal end of the second guide rail 62 as shown in Fig. 11, the first guide rails 61A, 61B and 61C are closely engaged in the second guide rail 62 without forming an unnecessary clearance therebetween, so that the good waterproof and dustproof effects are achieved between the first member 31 and the second member 32.

Particularly in this guide mechanism 60, the first guide rails 61A, 61B and 61C of a generally T-shaped cross-section are guided into the second guide rail 62 having the generally T-shaped groove, and therefore the waterproof and dustproof effects, achieved between the first member 31 and the second member 32, are marked.

When the engaging direction staring end of the first guide rail 61A abuts against the engaging direction terminal end of the second guide rail 62, the projections 34, formed at the lid portion 33 of the first member 31, are engaged respectively with the fixing portions 40, formed at the edge portion of the opening 39 in the second member 32, thereby maintaining the fixed condition of the first member 31 relative to the second member 32.

After the electric connection box 10 is thus mounted at the predetermined position, the battery 13 is placed on the support base 12 disposed adjacent to the electric connection box 10, and the headlamp 14 is fixed above the electric connection box 10 as shown in Fig. 1, and the optical axis of the headlamp 14 is adjusted.

When the maintenance and inspection of the electric connection box 10 are to be performed, first, the battery 13, placed on the support base 12, is lifted off this support base.

Then, the fixing portions 40 are elastically deformed respectively by the thumbs 17 of both hands (only one of which is shown) of the operator, and are disengaged respectively from the projections 34 formed on the lid portion 33 of the first member 31, and the first member 31 is drawn from the second member 32, with the forefingers 18 of both hands engaged respectively with the flange portions 35 formed on the lid portion 33.

The first member 31, thus drawn from the second member 32, is inverted by the operator, so that the maintenance surface 21 of the body 20 is directed upwardly, and the operator, while looking downward, performs the maintenance and inspecting operation.

The extra portion of the wire harness W is received within the second member 32, and therefore at this time the maintenance and inspection for the maintenance surface 21 can be performed without the need for removing the wire harness W from the body 20 and the second member 32.

In the above electric connection box 10, the support member 30 comprises the first member 31 and the second member 32, and therefore even when this electric connection box is disposed between the lower portion of the headlamp 14 and the upper portion of the wheel arch 15, the good maintenance ability can be obtained.

Particularly in this electric connection box 10, the second member 32 is fixedly secured to the inner surface of the engine room 11, and therefore the body 20 can be drawn out from the mounted region when the first member 31 is removed from the second member 32, and therefore the better maintenance ability can be obtained as compared with case where the first member is fixed to the fixing surface.

In this electric connection box 10, the support member 30 comprises the first member 31 and the second member 32, and therefore when the configurations, dimensions and so on of the first and second members 31 and 32 are suitably selected in accordance with the kind of car, any special processing does not need to be applied to the body 20, and therefore the versatility for the mounting form of the body 20 can be obtained, and the body 20 can be mounted at various places.

And besides, the second member 32 can close the one end of the first member 31 disposed in the through space-extending direction, and therefore the good waterproof effect for the maintenance surface 21 of the body 20 can be obtained.

In this electric connection box 10, the body 20 and the first member 31 are fixed to each other by the engagement portions 23 and the claws 36, and therefore when the form, number, positions and so on for the engagement portions 23 and the claws 36 are beforehand determined, a selected one among many kinds of bodies 20 of various constructions and a selected one among many kinds of first members 31 of various constructions can be used in combination, and therefore the good versatility can be obtained.

In the above electric connection box 10, the distal end of each claw 36, formed on the first member 31, projects from the peripheral portion of the body 20, and therefore when separating the first member 31 and the body 20, fixed together, from each other, the finger of the operator or a tool can be easily engaged with the claw 36 so as to elastically deform the same, and therefore the good operation efficiency can be obtained.

Particularly, the claw 36 is surrounded by the wall portion 37, and therefore damage of the claw 36, as well as the disengagement of the claw 36 from the engagement portion 23 as a result of the unintentional elastic deformation of the claw 36, can be reduced, and besides the claw 36 is prevented from being excessively elastically deformed when separating the first member 31 and the body 20, fixed together, from each other, and therefore the claw is prevented from damage.

In this electric connection box 10, the first member 31 and the second member 32 are guided relative to each other through the first guide rails 61A, 61B and 61C and the second guide rails 62, and therefore the first member 31 can be easily attached to and detached from the second member 32, and besides the position of the first member 31 relative to the second member 32 can be positively maintained.

In this electric connection box 10, the first guide rails 61A, 61B and 61C and the second guide rail 62 are provided between the outer side surface of the first member 31 and the inner side surface of the second member 32, and therefore there is no fear that the first member 31 is disengaged from the second member 32 in the direction of extending of the through space of the first member 31, and the mutually-fixed condition of the first and second members 31 and 32 can be positively maintained regardless of the mounting form of the support member 30.

Particularly in this guide mechanism 60, the first guide rails 61A, 61B and 61C of a generally T-shaped cross-section are engaged with the second guide rail 62 in a labyrinth manner, and therefore the good waterproof and dustproof effects can be achieved between the first and second members 31 and 32.

In the above electric connection box 10, the first guide rails 61A, 61B and 61C of a generally T-shaped cross-section are tapering in the engaging direction, and therefore the dimensional difference develops with respect to the groove width of the engaging direction starting end of the second guide rail 62, and therefore each of the first guide rails 61A, 61B and 61C can easily begin to be engaged in the second guide rail 62.

And besides, the width of the groove of the second guide rail 62 is increasing toward the engaging direction starting end thereof, and therefore the dimensional difference develops with respect to the width of the engaging direction starting end of each of the first guide rails 61A, 61B and 61C, and therefore each of the first guide rails 61A, 61B and 61C can easily begin to be engaged in the second guide rail 62.

The engaging direction starting end of each of the first guide rails 61A, 61B and 61C can be engaged in the engaging starting end of the second guide rail 62 through the notch portion 66, and therefore each of the first guide rails 61A, 61B and 61C can more easily begin to be engaged in the second guide rail 62 as compared with the case where the notch portion 66 is not provided.

The first guide rails 61A, 61B and 61C are provided at the predetermined intervals in the attaching and detaching direction, and the chamfered portions 63 are formed respectively at the corner portions of the longitudinal opposite ends of each of these first guide rails. Therefore, even when the first guide rails 61A, 61B and 61C are not disposed parallel to the second guide rail 62 in the longitudinal direction, the first guide rails 61A, 61B and 61C can be smoothly received and guided by the second guide rail 62, and the good operation efficiency is obtained.

In the above electric connection box 10, the flange portions 35 are formed at the edge portion of the lid portion 33, and therefore the first member 31 can be drawn from the second member 32, with the forefingers 18 of the operator engaged respectively with these flange portions 35.

In this electric connection box 10, the communication hole 41, which can communicate the inside and outside of the second member 32 with each other, is continuous with the opening 39, and therefore the body 20 can be oriented in such a manner that the maintenance surface 21 is directed toward the second member 32, and as compared with the case where the communication hole 41 is not continuous with the opening 39, the wire harness W can be more easily attached and detached relative to the communication hole 41.

In this electric connection box 10, the rib 70 is formed on the edge of the communication hole 41, and projects outwardly from the second member 32, and therefore the wire harness W can be positively fixed relative to the second member 32 by fixing the wire harness W to the rib 70.

Particularly in this rib 70, the band clip 78 of the binding band 76 is received in the recess 74 formed at the inner side of the rib, and by doing so, the wire harness W can be fixed to the second member 32 against movement in the direction of the axis thereof. In this rib 70, the engagement clip 77 of the binding band 76 is fitted and engaged in the through hole 75 formed in the rib 70, and by doing so, the wire harness W can be positively fixed to the second member 32.

In the above electric connection box 10, the first member 31 and the second member 32 are fixed to each other by the projections 34 and the fixing portions 40, and therefore the first and second members can be positively fixed to each other regardless of the mounting form thereof.

The electric connection box of the present invention is not limited to the above embodiment, and suitable modifications and improvements can be made, and the material, shape, dimensions, form, number, arrangement and so on of the body, the support member, the fixing surface, the first member, the second member, the engagement portion, the claw, the wall portion, the guide mechanism, the first guide rails, the second guide rail, the notch portion, the chamfered portion, the receiving space, the opening, the lid portion, the flange portion, the communication hole, the rib, the recess, the through hole, the projection, the fixing portion and so on, illustrated in the above embodiment, are arbitrary, and are not limited in so far as the present invention can be achieved.

As described above, in the present invention, the support member comprises the first member and the second member, and therefore the maintenance and inspection for the body can be performed by separating the first member from the second member, and therefore the good maintenance ability can be obtained even when the electric connection box is mounted at a narrow region of the automobile.

In the invention, the support member comprises the first member and the second member, and therefore when the shapes, dimensions and so on of the first and second members are suitably selected in accordance with the kind of car, any special processing does not need to be applied to the body, and therefore the versatility for the mounting form of the body can be obtained, and the body can be mounted at various places.

In the invention, the second member can close one end of the first member disposed in the through hole-extending direction, and therefore in the case where the body is mounted in such a manner that the connection portion faces the second member, the good waterproof effect for the body can be obtained.

In the invention, the second member is fixed to the fixing surface, and therefore the body can be drawn out from the mounted region when the first member is removed from the second member, and therefore the better maintenance ability can be obtained as compared with case where the first member is fixed to the fixing surface.

In the invention, the first member and the body are fixed to each other by the engagement portions and the claws, and therefore when the form, number, positions and so on for the engagement portions and the claws are beforehand determined, a selected one among many kinds of first members of various constructions and a selected one among many kinds of bodies of various constructions can be used in combination, and therefore the good versatility can be obtained.

In the invention, the distal end of each claw, formed on the first member, projects from the peripheral portion of the body, and therefore when separating the first member and the body, fixed together, from each other, the finger of the operator or a tool can be easily engaged with the claw so as to elastically deform the same, and therefore the good operation efficiency can be obtained.

In the invention, the claw is surrounded by the wall portion, and therefore damage of the claw, as well as the disengagement of the claw from the engagement portion as a result of the unintentional elastic deformation of the claw, can be reduced, and besides the claw is prevented from being excessively elastically deformed when separating the first member and the body, fixed together, from each other, and therefore the claw is prevented from damage.

In the invention, the first member and the second member are guided relative to each other through the first guide rails and the second guide rails, and therefore the first member can be easily attached to and detached from the second member, and besides the position of the first member relative to the second member can be positively maintained.

In the invention, the first guide rails are provided respectively at the outer surfaces of the first member while the second guide rails are provided respectively at the inner surfaces of the second member, and therefore there is no fear that the first member is disengaged from the second member (which is, for example, fixed to the fixing surface) in the direction of extending of the through space of the first member, and the mutually-fixed condition of the first and second members can be positively maintained regardless of the mounting form of the support member.

Particularly in the invention, the first guide rails are engaged respectively with the second guide rails in a labyrinth manner, and therefore the good waterproof and dustproof effects can be achieved between the first and second members.

In the invention, one of the first and second guide rails, having a generally T-shaped cross-section, is tapering in the engaging direction, and therefore the dimensional difference develops with respect to the groove width of the engaging direction starting end of the other guide rail. Therefore, the first and second guide rails can more easily begin to be engaged with each other as compared with the case where there is no dimensional difference between the width of the engaging direction starting end of the first guide rail and the groove width of the engaging direction starting end of the second guide rail.

In the invention, the width of the T-shaped groove, formed in the other of the first and second guide rails, is increasing toward the engaging direction starting end thereof, and therefore the dimensional difference develops with respect to the width of the engaging direction starting end of the one of the first and second guide rails. Therefore, the first and second guide rails can more easily begin to be engaged with each other as compared with the case where there is no dimensional difference between the width of the engaging direction starting end of the first guide rail and the groove width of the engaging direction starting end of the second guide rail.

In the invention, the engaging direction starting ends of the first and second guide rails can be engaged with each other through the notch portion, and therefore the first and second guide rails can more easily begin to be engaged with each other as compared with the case where the notch portion is not provided.

In the invention, the first guide rail or the second guide rail comprises the plurality of rails arranged at predetermined intervals in the attaching and detaching direction, and the chamfered portions are formed respectively at the corner portions of the opposite longitudinal ends of each of the rails. Therefore, even when the first and second guide rails are not parallel to each other in the longitudinal direction, one of the first and second guide rails can be smoothly received and guided by the other, and the good operation efficiency can be obtained.

In the invention, for example, the body is oriented in such a manner that the connection portion for the wire harness is directed toward the second member, and the second member is fixed to the fixing surface. In this case, when the first member is removed from the second member, the lid portion, provided at the first member, opens the opening in the second member, and therefore the first member can be removed from the second member, with the wire harness kept connected to the body, and therefore the maintenance and inspection can be performed easily.

In the invention, the flange portions are formed at the edge portion of the lid portion, and therefore the first member can easily be attached to and detached from the second member, with the fingers of the operator or the like engaged respectively with these flange portions.

In the invention, the second member has the communication hole which can communicate the inside and outside thereof with each other, and the communication hole is continuous with the opening. Therefore, the body can be oriented in such a manner that the wire harness connection portion is directed toward the second member, and the wire harness can be more easily attached to and detached from the communication hole as compared with the case where the communication hole is not continuous with the opening.

In the invention, the rib is formed at the edge portion of the communication hole, and projects outwardly from the second member. Therefore, the wire harness can be positively fixed to the second member by fixing the wire harness to the rib by an adhesive tape or the like.

In the invention, the recess is formed at the inner side of the rib. Therefore, when the band clip of the binding band, binding the wire harness, is received in the recess, the wire harness will not be moved relative to the second member in the axial direction, so that the wire harness can be positively fixed to the second member.

In the invention, the through hole is formed through the rib, and extends in the direction of the thickness of the rib. Therefore, when the engagement clip of the binding band, binding the wire harness, is fitted and engaged in the through hole, the wire harness can be positively fixed to the second member.

In the invention, there are provided the projections and the fixing portions for fixing the first and second members relative to each other, and therefore the first member and the second member can be fixed to each other.

## Claims

1. An electric connection box (10) wherein a body (20) containing an electric circuit is fixed to a fixing surface through a support member (30) **characterized by**:
said support member (30) including a frame-like first member (31) for receiving said body (20) and a second member (32) attached to said first member; and
wherein one of said first and second members is fixed to said fixing surface, and said body is attached to and detached from said first member in a direction of extending of a through space of said first member, and said first and second members are attached and detached relative to each other in a direction intersecting said through space-extending direction.

2. The electric connection box (10) according to claim 1,
wherein said second member (32) closes one end of said first member(31) disposed in the through space-extending direction.

3. The electric connection box (10) according to claim 1,
wherein said second member is (32) fixed to said fixing surface.

4. The electric connection box (10) according to claim 1,
wherein there are provided engagement portions(23) and claws(36) for engaging said body (20) with said first member (31), and said engagement portions are provided at one of said first member and said body while said claws, engageable respectively with said engagement portions, are provided at the other of said first member and said body.

5. The electric connection box (10) according to claim 4,
Wherein said claw(36) extends from an outer surface of said first member (31) in said through space-extending direction, and a distal end of said claw projects beyond a peripheral portion of said body (20) in said through space-extending direction.

6. The electric connection box (10) according to claim 4,
wherein wall portions (37) are provided in surrounding relation to said claws(36) respectively, and said wall portion limits an angle of elastic deformation of the corresponding claw.

7. The electric connection box (10) according to claim 1, further **characterized by**:
a guide mechanism (60) for guiding the sliding movement of said first and second members (31,32) relative to each other in a direction of attaching and detaching of said first and second members relative to each other, said guide mechanism including a pair of first guide rails (61A,61B,61C) provided on said first member (31) and extending in said attaching and detaching direction, and a pair of second guide rails (62) provided on said second member and being engageable with said first guide rails, respectively.

8. The electric connection box (10) according to claim 7,
wherein said first member (31) is received in said second member (32), and said first guide rails(61A,61B,61C) are provided respectively at a pair of outer surfaces of said first member facing away from each other, and said second guide rails (62) are provided respectively at a pair of inner surfaces of said second member (62) opposed respectively to said first guide rails.

9. The electric connection box (10) according to claim 7,
wherein one of said first guide rail(61A,61B,61C) and said second guide rail(62) has a generally T-shape cross-section, and the other of said first guide rail and said second guide rail has a generally T-shaped groove; and
said one of said first guide rail and said second guide rail is received in and guided by said other.

10. The electric connection box (10) according to claim 9,
wherein a width of an engaging direction starting end of said one of said first guide rail (61A,61 B,61 C) and said second guide rail (62) is smaller than a width of an engaging direction terminal end thereof.

11. The electric connection box (10) according to claim 9,
wherein a width of a groove at an engaging direction starting end of said other of said first guide rail (61A,61B,61C) and said second guide rail (62) is larger than a width of the groove at an engaging direction terminal end thereof.

12. The electric connection box (10) according to claim 9,
wherein a notch portion is formed at the engaging direction starting end portion of said other of said first guide rail (61A,61B,61C) and said second guide rail(62), and the engaging direction starting end portions of said first and second guide rails is engaged with each other through said notch portion in the direction of the width thereof.

13. The electric connection box (10) according to claim 9,
wherein said one of said first guide rail (61A,61B,61C) and said second guide rail(62) comprises a plurality of rails arranged at predetermined intervals in said attaching and detaching direction, and chamfered portions are formed respectively at corner portions of opposite longitudinal ends of each of said rails.

14. The electric connection box connection box (10) according to claim 1,
wherein said second member (32) has a cubic shape, and includes a receiving space (38) for receiving said first member (31), and an opening which is continuous with said receiving space, and is disposed in a plane intersecting the direction of attaching and detaching of said first and second members relative to each other; and
a lid portion extending from a side portion of said first member in said through space-extending direction closes said opening.

15. The electric connection box (10) according to claim 14, wherein a flange portion is formed at an edge portion of said lid portion.

16. The electric connection box (10) according to claim 14,
wherein said second member (32) has a communication hole which can communicate the inside and outside thereof with each other, and said communication hole is continuous with said opening.

17. The electric connection box (10) according to claim 16,
wherein a rib is formed at an edge portion of said communication hole, and projects outwardly from said second member (32) .

18. The electric connection box (10) according to claim 17,
wherein a recess is formed at the inner side of said rib.

19. The electric connection box (10) according to claim 17,
wherein a through hole is formed through said rib and extends in a direction of a thickness of said rib.

20. The electric connection box (10) according to claim 14,
wherein there are provided projections and fixing portions for fixing said first and second members (31,32) relative to each other, and said projections are provided at one of an edge portion of said opening and a peripheral portion of said lid portion, and said fixing portions, engageable respectively with said projections, are provided at the other of the edge portion of said opening and the peripheral portion of said lid portion.

## Patentansprüche

1. Elektroanschlusskasten (10), wobei ein Körper (20), der einen elektrischen Schaltkreis enthält, an einer Befestigungsfläche mittels eines Stützelements (30) befestigt ist, **dadurch gekennzeichnet,**
**dass** das Stützelement (30) ein rahmenförmiges erstes Element (31) zur Aufnahme des Körpers (20) und ein zweites Element (32), das an dem ersten Element befestigt ist, umfasst und
wobei eines der Elemente, nämlich das erste oder das zweite Element, an der Befestigungsfläche befestigt ist und wobei der Körper an dem ersten Element in einer Erstreckungsrichtung eines Durchgangsfreiraums des ersten Elements befestigt und von diesem gelöst wird und wobei das erste und das zweite Element relativ zueinander in einer Richtung, die die Durchgangsfreiraumerstreckungsrichtung schneidet, befestigt und gelöst werden.

2. Elektroanschlusskasten (10) gemäß Anspruch 1,
wobei das zweite Element (32) ein Ende des ersten Elements (31), das in der Durchgangsfreiraumerstreckungsrichtung angeordnet ist, verschließt.

3. Elektroanschlusskasten (10) gemäß Anspruch 1,
wobei das zweite Element (32) an der Befestigungsfläche befestigt ist.

4. Elektroanschlusskasten (10) gemäß Anspruch 1,
wobei Eingriffsabschnitte (23) und Klauen (36) für den Eingriff des Körpers (20) in dem ersten Element (21) vorgesehen sind und wobei die Eingriffsabschnitte an dem ersten Element oder dem Körper vorgesehen sind, während die Klauen, die mit den Eingriffsabschnitten in Eingriff bringbar sind, an dem jeweils anderen Teil, nämlich dem ersten Element oder dem Körper vorgesehen sind.

5. Elektroanschlusskasten (10) gemäß Anspruch 4,
wobei die Klaue (36) sich von einer Außenfläche des ersten Elements (31) in der Durchgangsfreiraumerstreckungsrichtung erstreckt, und ein freies Ende der Klaue über einen Umfangsabschnitt des Körpers (20) in der Durchgangsfreiraumerstreckungsrichtung vorragt.

6. Elektroanschlusskasten (10) gemäß Anspruch 4,
wobei Wandabschnitte (37) jeweils um die Klauen (36) herum vorgesehen sind und wobei der Wandabschnitt einen Winkel der elastischen Verformung der jeweiligen Klaue begrenzt.

7. Elektroanschlusskasten (10) gemäß Anspruch 1, ferner **gekennzeichnet durch**
einen Führungsmechanismus (60) zum Führen der Gleitbewegung des ersten und des zweiten Elements (31, 32) relativ zueinander in einer Befestigungs-und Löserichtung des ersten und des zweiten Elements relativ zueinander, wobei der Führungsmechanismus zwei ein Paar bildende erste Führungsschienen (61A, 61B, 61C), die an dem ersten Element (31) vorgesehen sind und sich in der Befestigungs- und Löserichtung erstrecken, und zwei ein Paar bildende zweite Führungsschienen (62) umfasst, die an dem zweiten Element vorgesehen sind und mit den ersten Führungsschienen in Eingriff bringbar sind.

8. Elektroanschlusskasten (10) gemäß Anspruch 7,
wobei das erste Element (31) in dem zweiten Element (32) aufgenommen ist, und wobei die ersten Führungsschienen (61A, 61 B, 61 C) jeweils an zwei ein Paar bildenden und voneinander weg weisenden Außenflächen des ersten Elements vorgesehen sind und wobei die zweiten Führungsschienen (62) jeweils an zwei ein Paar bildenden Innenflächen des zweiten Elements (32), die den ersten Führungsschienen gegenüberliegen, vorgesehen sind.

9. Elektroanschlusskasten (10) gemäß Anspruch 7,
wobei eine der ersten Führungsschienen (61A, 61 B, 61 C) und eine der zweiten Führungsschienen (62) einen im Allgemeinen T-förmigen Querschnitt aufweist und die andere erste Führungsschiene und andere zweite Führungsschiene eine im Allgemeinen T-förmige Nut aufweist, und
wobei eine der ersten und der zweiten Führungsschienen in der anderen aufgenommen und geführt wird.

10. Elektroanschlusskasten (10) gemäß Anspruch 9,
wobei eine Breite eines Eingriffsrichtungsanfangsendes der ersten Führungsschiene (61A, 61 B, 61 C) und der zweiten Führungsschiene (62) kleiner als eine Breite eines Eingriffsrichtungsanschlussklemmenendes ist.

11. Elektroanschlusskasten (10) gemäß Anspruch 9,
wobei eine Breite einer Nut an einem Eingriffsrichtungsanfangsende der anderen ersten Führungsschiene (61A, 61B, 61C) und der zweiten Führungsschine (62) größer als eine Breite der Nut an einem Eingriffsrichtungsanschlussklemmenende ist.

12. Elektroanschlusskasten (10) gemäß Anspruch 9,
wobei ein Auskerbungsabschnitt an dem Eingriffsrichtungsanfangsendabschnitt der anderen ersten Führungsschiene (61A, 61 B, 61 C) und der zweiten Führungsschiene (62) ausgebildet ist, und wobei die Eingriffsrichtungsanfangsendabschnitte der ersten und der zweiten Führungsschienen miteinander durch den Auskerbungsabschnitt in der Breitenrichtung desselben in Eingriff sind.

13. Elektroanschlusskasten (10) gemäß Anspruch 9,
wobei eine der ersten Führungsschienen (61A, 61B, 61C) und der zweiten Führungsschiene (62) eine Mehrzahl von Führungsschienen, die in vorbestimmten Abständen in der Befestigungs- und Löserichtung angeordnet sind, umfassen und wobei abgerundete Abschnitte jeweils an Eckabschnitten entgegengesetzter Enden jeder der Schienen ausgebildet sind.

14. Elektroanschlusskasten (10) gemäß Anspruch 1,
wobei das zweite Element (32) eine kubische Form aufweist und einen Aufnahmefreiraum (38) zur Aufnahme des ersten Elements (31) und eine Öffnung, die mit dem Aufnahmefreiraum kontinuierlich ausgebildet ist und in einer Ebene, die die Befestigungs- und Löserichtung des ersten und des zweiten Elements relativ zueinander schneidet, angeordnet ist, und
wobei ein Deckelabschnitt, der sich von einem Seitenabschnitt des ersten Elements in der Durchgangsfreiraumerstreckungsrichtung erstreckt, die Öffnung verschließt.

15. Elektroanschlusskasten (10) gemäß Anspruch 14,
wobei ein Flanschabschnitt an einem Kantenabschnitt des Deckelabschnitts ausgebildet ist.

16. Elektroanschlusskasten (10) gemäß Anspruch 14,
wobei das zweite Element (32) eine Verbindungsbohrung aufweist, die zur Innenseite und Außenseite desselben offen ist, und wobei die Verbindungsbohrung mit der Öffnung kontinuierlich ausgebildet ist.

17. Elektroanschlusskasten (10) gemäß Anspruch 16,
wobei eine Rippe an einem Kantenabschnitt der Verbindungsbohrung ausgebildet ist und von dem zweiten Element (32) nach außen vorragt.

18. Elektroanschlusskasten (10) gemäß Anspruch 17,
wobei eine Ausnehmung an der Innenseite der Rippe ausgebildet ist.

19. Elektroanschlusskasten (10) gemäß Anspruch 17,
wobei eine Durchgangsbohrung durch die Rippe ausgebildet ist und sich in Richtung der Dicke der Rippe erstreckt.

20. Elektroanschlusskasten (10) gemäß Anspruch 14,
wobei Vorsprünge und Befestigungsabschnitte zum Befestigen des ersten und des zweiten Elements (31, 32) relativ zueinander vorgesehen sind und wobei die Vorsprünge an einem Kantenabschnitt der Öffnung und an einem Umfangsabschnitt des Deckelabschnitts vorgesehen sind und wobei die Befestigungsabschnitte, die mit den Vorsprüngen in Eingriff bringbar sind, an dem anderen Kantenabschnitt der Öffnung und Umfangsabschnitt des Deckelabschnitts vorgesehen sind.

## Revendications

1. Boîtier de connexion électrique (10), dans lequel un corps (20) contenant un circuit électrique, est fixé sur une surface de fixation par le biais d'un élément de support (30), **caractérisé par** :
ledit élément de support (30) comprenant un premier élément en forme de châssis (31) pour recevoir ledit corps (20) et un deuxième élément (32) fixé sur ledit premier élément ; et
dans lequel l'un desdits premier et deuxième éléments est fixé sur ladite surface de fixation, et ledit corps est fixé sur et détaché dudit premier élément dans une direction d'extension d'un espace de passage dudit premier élément, et lesdits premier et deuxième éléments sont fixés et détachés l'un par rapport à l'autre dans une direction coupant ladite direction d'extension de l'espace de passage.

2. Boîtier de connexion électrique (10) selon la revendication 1, dans lequel ledit deuxième élément (32) ferme une extrémité dudit premier élément (31) disposé dans la direction d'extension de l'espace de passage.

3. Boîtier de connexion électrique (10) selon la revendication 1, dans lequel ledit deuxième élément (32) est fixé sur ladite surface de fixation.

4. Boîtier de connexion électrique (10) selon la revendication 1, dans lequel on trouve des parties de mise en prise (23) et des griffes (36) pour mettre en prise ledit corps (20) avec ledit premier élément (31), et lesdites parties de mise en prise sont prévues au niveau de l'un parmi ledit premier élément et ledit corps alors que lesdites griffes, pouvant respectivement se mettre en prise avec lesdites parties de mise en prise, sont prévues au niveau de l'autre parmi ledit premier élément et ledit corps.

5. Boîtier de connexion électrique (10) selon la revendication 4, dans lequel ladite griffe (36) s'étend à partir d'une surface externe dudit premier élément (31) dans ladite direction d'extension de l'espace de passage, et une extrémité distale de ladite griffe fait saillie au-delà d'une partie périphérique dudit corps (20) dans ladite direction d'extension de l'espace de passage.

6. Boîtier de connexion électrique (10) selon la revendication 4, dans lequel des parties de paroi (37) sont prévues en relation périphérique par rapport auxdites griffes (36) respectivement, et ladite partie de paroi délimite un angle de déformation élastique de la griffe correspondante.

7. Boîtier de connexion électrique (10) selon la revendication 1, **caractérisé en outre par** un mécanisme de guidage (60) pour guider le mouvement de coulissement desdits premier et deuxième éléments (31, 32) l'un par rapport à l'autre dans une direction de fixation et de détachement desdits premier et deuxième éléments l'un par rapport à l'autre, ledit mécanisme de guidage comprenant une paire de premiers rails de guidage (61 A, 61 B, 61 C) prévue sur ledit premier élément (31) et s'étendant dans ladite direction de fixation et de détachement, et une paire de deuxièmes rails de guidage (62) prévue sur ledit deuxième élément et pouvant se mettre en prise avec lesdits premiers rails de guidage, respectivement.

8. Boîtier de connexion électrique (10) selon la revendication 7, dans lequel ledit premier élément (31) est reçu dans ledit deuxième élément (32), et lesdits premiers rails de guidage (61 A, 61 B, 61 C) sont prévus respectivement au niveau de deux surfaces externes dudit premier élément se faisant face, et lesdits deuxièmes rails de guidage (62) sont prévus respectivement au niveau d'une paire de surfaces internes dudit deuxième élément (62), respectivement opposés auxdits premiers rails de guidage.

9. Boîtier de connexion électrique (10) selon la revendication 7,
dans lequel l'un parmi ledit premier rail de guidage (61A, 61B, 61C) et ledit deuxième rail de guidage (62) a une section transversale généralement en forme de T, et l'autre parmi ledit premier rail de guidage et ledit deuxième rail de guidage a une rainure généralement en forme de T ; et
ledit un parmi ledit premier rail de guidage et ledit deuxième rail de guidage est reçu et guidé par ledit autre rail.

10. Boîtier de connexion électrique (10) selon la revendication 9, dans lequel une largeur d'une extrémité de départ de direction de mise en prise dudit un rail parmi ledit premier rail de guidage (61A, 61 B, 61 C) et ledit deuxième rail de guidage (62) est inférieure à une largeur de son extrémité terminale dans la direction de mise en prise.

11. Boîtier de connexion électrique (10) selon la revendication 9, dans lequel une largeur d'une rainure au niveau d'une extrémité de départ dans la direction de mise en prise dudit autre rail parmi ledit premier rail de guidage (61 A, 61 B, 61 C) et ledit deuxième rail de guidage (62) est plus grande qu'une largeur de la rainure au niveau de son extrémité terminale dans la direction de mise en prise.

12. Boîtier de connexion électrique (10) selon la revendication 9, dans lequel une partie d'encoche est formée au niveau de la partie d'extrémité de départ de direction de mise en prise dudit autre rail parmi ledit premier rail de guidage (61 A, 61 B, 61 C) et ledit deuxième rail de guidage (62) et les parties d'extrémité de départ de direction de mise en prise desdits premier et deuxième rails de guidage sont mises en prise entre elles par le biais de ladite partie d'encoche dans le sens de sa largeur.

13. Boîtier de connexion électrique (10) selon la revendication 9, dans lequel ledit un rail dudit premier rail de guidage (61 A, 61B, 61C) et dudit deuxième rail de guidage (62) comprend une pluralité de rails agencés à intervalles prédéterminés dans ladite direction de fixation et de détachement, et des parties chanfreinées sont formées respectivement au niveau des parties de coin des extrémités longitudinales opposées de chacun desdits rails.

14. Boîtier de connexion électrique (10) selon la revendication 1,
dans lequel ledit deuxième élément (32) a une forme cubique, et comprend un espace de réception (38) pour recevoir ledit premier élément (31) et une ouverture qui est continue avec ledit espace de réception, et est disposée dans un plan coupant la direction de fixation et de détachement desdits premier et deuxième éléments l'un par rapport à l'autre ; et
une partie de couvercle s'étendant à partir d'une partie latérale dudit premier élément dans ladite direction d'extension de l'espace de passage ferme ladite ouverture.

15. Boîtier de connexion électrique (10) selon la revendication 14, dans lequel une partie de rebord est formée au niveau d'une partie de bord de ladite partie de couvercle.

16. Boîtier de connexion électrique (10) selon la revendication 14, dans lequel ledit deuxième élément (32) a un trou de communication qui peut faire communiquer son intérieur et son extérieur entre eux, et ledit trou de communication est continu avec ladite ouverture.

17. Boîtier de connexion électrique (10) selon la revendication 16, dans lequel une nervure est formée au niveau d'une partie de bord dudit trou de communication, et fait saillie vers l'extérieur à partir dudit deuxième élément (32).

18. Boîtier de connexion électrique (10) selon la revendication 17, dans lequel un évidement est formé au niveau du côté interne de ladite nervure.

19. Boîtier de connexion électrique (10) selon la revendication 17, dans lequel un trou de passage est formé à travers ladite nervure et s'étend dans une direction d'une épaisseur de ladite nervure.

20. Boîtier de connexion électrique (10) selon la revendication 14, dans lequel on trouve des saillies et des parties de fixation pour fixer lesdits premier et deuxième éléments (31, 32) l'un par rapport à l'autre, et lesdites saillies sont prévues au niveau de l'une parmi une partie de bord de ladite ouverture et une partie périphérique de ladite partie de couvercle, et lesdites parties de fixation, pouvant se mettre respectivement en prise avec lesdites saillies, sont prévues au niveau de l'autre parmi la partie de bord de ladite ouverture et la partie périphérique de ladite partie de couvercle.
